# EUROPÄISCHE PATENTSCHRIFT

(11) **EP 1 301 978 B1**
(45) Veröffentlichungstag und Bekanntmachung des Hinweises auf die Patenterteilung: **03.04.2013**
(21) Anmeldenummer: 01964850.0
(22) Anmeldetag: 20.07.2001
(51) Int. Cl.: H02K 5/16, F16C 35/077

(54) **WÄLZLAGERANORDNUNG FÜR EINEN ELEKTROMOTOR**
ROLLING BEARING ARRANGEMENT FOR AN ELECTROMOTOR
SYSTEME DE PALIER A ROULEMENT POUR UN MOTEUR ELECTRIQUE

(30) Priorität: 21.07.2000 DE 10037423
(43) Veröffentlichungstag der Anmeldung: 16.04.2003
(73) Patentinhaber: Rexroth Indramat GmbH, 97816 Lohr am Main (DE)
(72) Erfinder: SCHELBERT, Johannes, 97794 Rieneck (DE)
(86) Internationale Anmeldenummer: PCT/DE2001/002807
(87) Internationale Veröffentlichungsnummer: WO 2002/009258

(56) Entgegenhaltungen:
- EP-A- 0 417 744
- US-A- 4 511 837
- US-A- 6 030 128

## Beschreibung

Die Erfindung betrifft eine Wälziageranordnung für einen Elektromotor gemäß dem Oberbegriff des Anspruchs 1.

Insbesondere bei Asynchronmotoren tritt im Zusammenhang mit Anwendungen, bei denen eine konstante Drehzahl vorherrscht, ein Stromfluss zwischen dem äußeren Stator und dem hierin drehbar gelagerten Rotor auf, wobei der Stromkreis durch die Wälzlager für die Rotorfagerung geschlossen wird. Der Stromfluss verursacht eine Beschädigung der Wälzlager. Stromgeschädigte Lager weisen eine typische Querriffelung der Laufbahn auf, die zu Vibrationen und Geräuschen führt, bevor das Lager endgültig ausfällt Der Stromfluss durch das Lager erfolgt von dessen Innenring zum Außenring. Dabei muss der Strom durch die Wälzkörperanordnung - meist lebensdauergeschmierte Stahlkugeln - fließen und hat auf diesem Weg zwei Schmierfilme, nämlich seitens des Innenrings und seitens des Außenrings, zu überwinden. Die Durchschlagsfestigkeit der insoweit in Reihe geschalteten Schmierfilme des Wälzlagers liegt vom Innenring zum Außenring gemessen stationär bei ca. 0,5 Volt. Damit kann bei einer Spannung von 20 Volt über dem Wälzlager für nur etwa einhundert Mikrosekunden gehalten werden, bevor ein Durchschlag erfolgt. Die Durchschlagsspannung hängt im übrigen auch von der Drehzahl, der Temperatur und anderen Parametern ab. Entscheidend ist jedoch, dass ein Lagerstrom stets einhergeht mit einem elektrischen Durchschlagen des Schmierfilms. Die hieraus resultierende Schädigung der Laufbahn geschieht nach einem Prinzip, dass mit einer Funkenerosion vergleichbar ist.

Ein Lagerstrom entsteht bei einem Drehstrommotor durch die unsymmetrische Feldverteilung. Dies führt dazu, dass das Drehfeld eine kleine Spannung mit Speisefrequenz in die Welle des Rotors induziert. Der isolierende Schmierfilm der Wälzlager wird ab einem kritischen Wert durchbrochen und es bildet sich derbesagte Stromkreis aus, der durch den Rotor, über beidseitige Wälzlager und den Stator fließt. Weiterhin treten auch kapazitive Entladungsströme zwischen dem Rotor und dem Stator oder impulsartige Kreisströme auf, die im Zusammenhang mit einem Umrichterbetrieb stehen.

Es ist bereits versucht worden, schädigende Lagerströme durch Verwendung eines leitfähigen Fettes im Bereich des Wälzlagers zu vermeiden. Obwohl diesem Fett leitfähige Bestandteile - wie Graphit - beigemischt wird, zeigte sich im Versuch keine gravierende Veränderung der isolierenden Eigenschaften des Schmierfilms, so dass ein elektrisches Durchschlagen des Schmierfilms mit Schädigung der Laufbahn hierdurch nicht verhindert werden kann.

Zur Vermeidung eines Lagerstroms haben sich in der Praxis Lösungen durchgesetzt, die eine Unterdrückung Mittels Filteranordnungen bewirken oder den wälzlagerschädigenden Stromkreis im Elektromotor gänzlich unterbrechen. Letzteres wird auf einfache Weise durch den Einsatz eines isolierten Lagers erreicht. Dafür stehen im Stand der Technik entweder Lager mit einer Isolierschicht auf dem Außenring oder Lager mit keramischen Wälzkörpern zur Verfügung.

Im Falle einer auf dem Außenring angeordneten dünnen Isolierschicht ist der Lagerstrom jedoch nicht vollständig unterdrückbar, weil die - meist aus Aluminiumoxid bestehende - Isolierschicht eine elektrische Kapazität darstellt, die für hochfrequente Anteile eines Lagerstroms durchlässig bleibt. Weiterhin ist die Aufbringung der Isolierschicht recht aufwendig.

Im Falle von Lagern mit keramischen Wälzkörpern, sog. Hybridlagern, kann dagegen eine zuverlässige Isolationswirkung erzielt werden, so dass der Stromfluss durch die Wälzlager wirkungsvoll unterbrechbar ist. Derartige Hybridlager sind jedoch aufwendig in der Fertigung und führen insoweit zu vergleichsweise hohen Materialkosten. Darüber hinaus ist es von Nachteil, dass Hybridlager nicht in allen standardisierten Größen zu Verfügung stehen.

Die US 6,030,128 offenbart eine Isolierung zwischen dem wälzlager auβenring und der Aufnahme.

Es ist die Aufgabe der vorliegenden Erfindung, eine Wälzlageranordnung für einen Elektromotor zu schaffen, die auf einfache Weise zuverlässig einen Lagerstrom verhindert.

Die Aufgabe wird ausgehend von einer Wälzlageranordnung für einen Elektromotor gemäß dem Oberbegriff des Anspruchs 1 in Verbindung mit dessen kennzeichnenden Merkmalen gelöst. Die nachfolgenden abhängigen Ansprüche geben vorteilhafte Weiterbildungen der Erfindung an.

Die Erfindung schließt die technische Lehre ein, dass zur Vermeidung eines elektrischen Stromflusses zwischen dem Stator und dem Rotor der Lagersitz des Außenringes mit einer lsolationsanordnung ausgekleidet ist, wobei die lsolationsanordnung ein blechartig dünnes Halbzeug mit gegenüber der Lagerradialkraft druckfestem Isolationsmaterial aufweist.

Der Vorteil dieser isolierten Wälzlageranordnung liegt insbesondere darin, dass weiterhin herkömmliche standardisierte Wälzlager zur Lagerung des Rotors innerhalb des Stators verwendet werden können, war zu erheblichen Einsparungen gegenüber des Einsatzes von Hybridlagern führt. Es ist vor der Montage des Wälzlagers lediglich der im Stator angeordnete Lagersitz des Außenringes mit dem Isolationsmaterial auszukleiden, ehe das Wälzlager montiert wird.

Vorzugsweise kommt als Isolationsmaterial ein zumindest teilweise aus Teflon bestehendes Halbzeug zur Anwendung. Dieses kann z. B. aus einem metallischen Blech bestehen, dass zumindest auf einer Seite mit einer isolierenden Teflonschicht überzogen ist. Bei einer Mindestdicke von ca. 0,2 mm hat sich die Teflonschicht als besonders durchschlagfest gegenüber auftretenden Lagerströmen erwiesen.

Gemäß der Erfindung besteht die Isolationsanordnung aus einem Hohlzylinderelement mit mindestens einem stimflächenseitig an diesem angeordneten Ringscheibenelement. Das Hohlzylinderelement kann dabei auf besonders einfache Weise aus einer durch Teflonbeschichtung isolierten Gleitlager buchse hergestellt werden. Die Ringscheibenelemente sind aus demselben Material bestehend als Stanzteile ebenfalls einfach herstellbar oder können auch aus Isolierpapier mit einer Mindestdicke von 0,15 mm bestehen. Die mehrteilige Isolationsanordnung kann den Außenring des Wälzlagers entweder U-förmig oder L-förmig umgeben. Im Falle einer L-förmigen Auskleidung des Lagersitzes wird das Wälzlager durch einen auf den Außenring axial drückend einwirkenden und am Stator angeschraubten Haltering gehalten, der aus einem elektrisch nicht leitfähigen Material besteht, so dass ein Stromfluss über den Außenring nicht erfolgen kann.

Weitere die Erfindung verbessernde Maßnahmen werden nachstehend gemeinsam mit der Beschreibung eines bevorzugten Ausgangsbeispiels der Erfindung anhand der Figuren näher dargestellt.

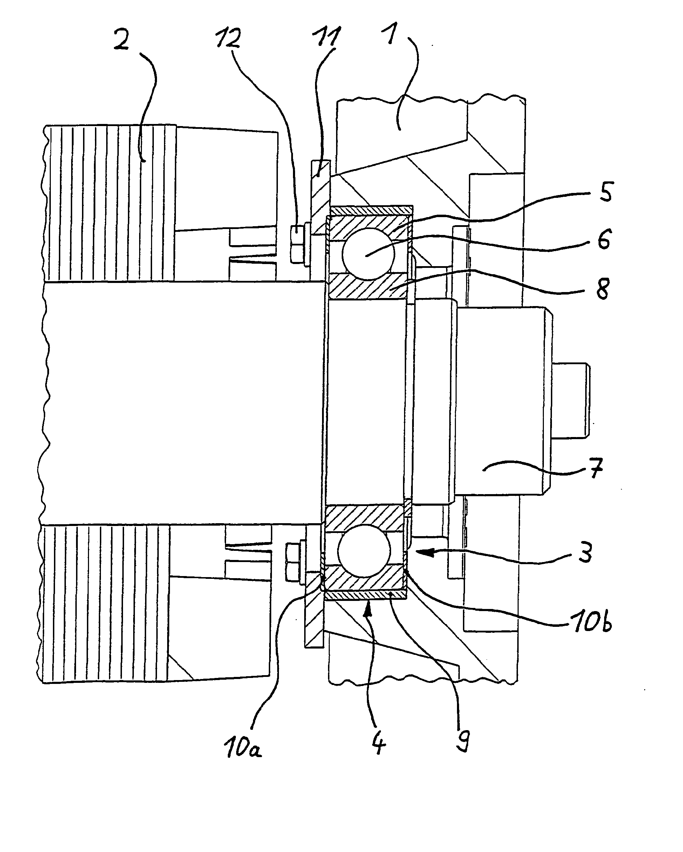

Die einzige Figur zeigt einen teilweise Längsschnitt durch einen Elektromotor im Bereich einer Wälziageranordnung.

Der als Asynchronmotor ausgeführte Elektromotor beseht im wesentlichen aus einem Stator 1, bezüglich dem ein Rotor 2 drehbar angeordnet ist. Zur drehenden Lagerung des Rotors 2 im Stator ist ein Wälzlager 3 in Form eines Kugellagers vorgesehen. Das Wälzlager 3 ist ortsfest zum Stator 1 in einem hierin ausgebildeten Lagersitz 4 gehalten. Der Lagersitz 4 wirkt dabei mit einem Außenring 5 des Wälzlagers 3 zusammen. Der Außenring 5 ist über eine Wälzkörperanordnung 6, hier kugelförmige Wälzkörper, mit einem auf einer Welle 7 des Rotors 2 angeordneten Innenring 8 zur Drehlagerung verbunden.

Zur Vermeidung eines Lagerstroms, der sich ausgehend vom Rotor 2 über dessen Welle 7 und über das Wälzlager 3 auf den Stator 1 ausbreitet, ist der Lagersitz 4 mit einer lsolationsanordnung ausgekleidet. Die lsolationsanordnung ist mehrteilig aufgebaut und besteht aus einem Hohlzylinderelement 9 an dem je stimflächenseitig ein Ringscheibenelement 10a und 10b angeordnet ist. Diese Anordnung ermöglicht eine wirksame Isolation des Wälzlagers 3 über dessen Außenring 5 innerhalb des Lagersitzes 4. Das Hohlzylinderelement 9 der Isolationsanordnung ist aus einer durch Teflonbeschichtung isolierten Gleitlagerbuchse hergestellt. Die Isolationswirkung wird über die elektrisch nicht leitende Teflonbeschichtung bewirkt. Die beiden Ringscheibenelemente 10a und 10b sind als Blechstanzteile aus demselben Material hergestellt Zur Befestigung des Wälzlagers 3 samt der U-förmigen lsolationsanordnung ist ein Haltering 11 vorgesehen, der über Schrauben 12 am Stator 1 befestigt ist und axial drückend auf den Außenring 5 des Wälzlagers 3 einwirkt.

Die erfindungsgemäße stromisolierte Wälzlageranordnung verhindert durch einfache Mittel eine Schädigung der in einem Elektromotor eingesetzten Wälzlager aufgrund eines Lagerstroms.

### Bezugszeichenliste:

- 1: Stator
- 2: Rotor
- 3: Wälzlager
- 4: Lagersitz
- 5: Außenring
- 6: Wälzkörperanordnung
- 7: Welle
- 8: Innenring
- 9: Hohlzylinderelement
- 10: Ringscheibenelement
- 11: Haltering
- 12: Schraube

## Patentansprüche

1. Wälzfageranordnung für einen Elektromotor, der im wesentlichen aus einem innerhalb eines Stators (1) drehbar angeordnetem rotationssymmetrischen Rotor (2) besteht, wobei zur drehenden Lagerung des Rotors (2) mindestens ein standardmäßiges Wälziager (3) vorgesehen ist, das einen ortsfest zum Stator (1) in einem Lagersitz (4) angeordneten Außenring (5) aufweist, der über eine Wälzkörperanordnung (6) mit einem auf einer Welle (7) des Rotors (2) angeordneten Innenring (8) zusammenwirkt wobei zur Vermeidung eines Stromflusses zwischen Stator und Rotor der Lagersitz mit einer Isolationsanordnung ausgekleidet ist, wobei
der Lagersitz (4) des Außenringes (5) mit der Isolationsanordnung (9, 10a. 10b) ausgeweidet ist, wobei die Isolationsanordnung ein blechartig dünnes Halbzeug mit gegenüber der Lagerradtalkraft druckfestem Isolationsmaterial aufweist **dadurch gekennzeichnet, dass** die isolationsanordnung mehrteilig aufgebaut ist und aus einem

2. Wäbisgeranordnung nach Anspruch 1,
**dadurch gekennzeichnet,**
**dass** als Isolationsmaterial ein zumindest teilweise aus Tellon bestehendes Halbzeug zur Anwendung kommt.

3. Wälzlageranordnung nach Anspruch 2,
dadurch gekenzeichnet,
dass das Halbzeug aus einem metallischen Blech besteht, das zumindest auf einer Seite mit einer isolierenden Teflonschicht überzogen ist.

4. Wälzlageranordung nach Anspruch 3.
**dadurch gekennzeichnet,**
**dass** die Teflonschicht eine Mindoestdicke von 0,2 mm aufweist. Hohlzylinderelement (9) mit mindestens einem stirnfächenseitig an diesem angeordneten Ringscheibenelement (10a.10b) besteht.

5. Wälzlageranordung nach Anspruch 1.
**dadurch gekennzeichnet.**
**dass** das Hohlzylinderelement (9) aus einer durch Teflonbeschichtung isolierten Gleitlagerbuchse hergestellt ist.

6. wälzlageranordnung nach Anspruch 1,
**dadurch gekennzeichnet.**
**dass** die mehrteilige Isolationsanordnung den Außenring (5) des Wälzlagers (3) U-förmig oder L-förmig umgibt.

7. Wälzlageranordnung nach Anspruch 6,
**dadurch gekennzeichnet,**
**dass** im Falle einer L-förmigen Auskleidung des Lagersitzes (4) das Wälzlager (3) durch einen auf den Außenring (5) axial drückend einwirkenden und am Stator (1) mittels Schrauben (12) befestigtem Haltering (11) gehalten ist, der aus einem elektrisch nicht leitfähigem Material hergetellt ist.

8. Wältzlageranordnung nach Anspruch 1.
**dadurch gekennzeichnet,**
**dass** das Ringscheibenelement (10a, 10b) aus Isolierpapier mit einer Mindestdicke von 0,15 mm hergestellt ist.

## Claims

1. Rolling bearing arrangement for an electric motor which consists essentially of a rotationally symmetrical rotor (2) arranged rotatably inside a stator (1), there being provided for the rotational mounting of the rotor (2) at least one standard rolling bearing (3) which has an outer ring (5) which is arranged at a fixed location with respect to the stator (1) in a bearing seat (4) and which cooperates via a rolling body arrangement (6) with an inner ring (8) arranged on a shaft (7) of the rotor (2), the bearing seat being lined with an insulating arrangement in order to avoid a current flux between the stator and rotor, the bearing seat (4) of the outer ring (5) being lined with the insulating arrangement (9, 10a, 10b), the insulating arrangement having a semi-finished product which is thin in the manner of sheet metal and which has insulating material pressure-resistant with respect to the bearing radial force, **characterized in that** the insulating arrangement is of multi-part construction and consists of a hollow-cylinder element (9) with at least one annular-disc element (10a, 10b) arranged on the latter on the end-face side.

2. Rolling bearing arrangement according to Claim 1, **characterized in that** the insulating material used is a semi-finished product consisting at least partially of Teflon.

3. Rolling bearing arrangement according to Claim 2, **characterized in that** the semi-finished product consists of a metal sheet which is covered at least on one side with an insulating Teflon layer.

4. Rolling bearing arrangement according to Claim 3, **characterized in that** the Teflon layer has a minimum thickness of 0.2 mm.

5. Rolling bearing arrangement according to Claim 1, **characterized in that** the hollow-cylinder element (9) is produced from a plain bearing bush insulated by means of a Teflon coating.

6. Rolling bearing arrangement according to Claim 1, **characterized in that** the multi-part insulating arrangement surrounds the outer ring (5) of the rolling bearing (3) in a U-shaped or L-shaped manner.

7. Rolling bearing arrangement according to Claim 6, **characterized in that**, in the case of an L-shaped lining of the bearing seat (4), the rolling bearing (3) is held by a holding ring (11) which acts upon the outer ring (5) with axial pressure and is fastened to the stator (1) by means of screws (12) and which is produced from an electrically non-conductive material.

8. Rolling bearing arrangement according to Claim 1, **characterized in that** the annular-disc element (10a, 10b) is produced from insulating paper having a minimum thickness of 0.15 mm.

## Revendications

1. Agencement de palier à roulement pour un moteur électrique, qui se compose essentiellement d'un rotor à symétrie de révolution (2) disposé de manière rotative à l'intérieur d'un stator (1), au moins un palier à roulement (3) de dimensions standard étant prévu pour le support en rotation du rotor (2), lequel palier à roulement présente une bague extérieure (5) disposée fixement par rapport au stator (1) dans un siège de palier (4), laquelle bague extérieure coopère par le biais d'un agencement de corps de roulement (6) avec une bague intérieure (8) disposée sur un arbre (7) du rotor (2), le siège de palier étant revêtu d'un agencement d'isolation pour éviter un flux de courant entre le stator et le rotor,
le siège de palier (4) de la bague extérieure (5) étant revêtu de l'agencement d'isolation (9, 10a, 10b), l'agencement d'isolation présentant un produit semi-fini mince de type tôle avec un matériau d'isolation résistant à la pression par rapport à la force radiale du palier,
**caractérisé en ce que** l'agencement d'isolation est construit en plusieurs parties et se compose d'un élément cylindrique creux (9) avec au moins un élément de disque annulaire (10a, 10b) disposé sur celui-ci du côté de la surface frontale.

2. Agencement de palier à roulement selon la revendication 1,
**caractérisé en ce que** l'on utilise comme matériau d'isolation un produit semi-fini constitué au moins en partie de téflon.

3. Agencement de palier à roulement selon la revendication 2,
**caractérisé en ce que** le produit semi-fini se compose d'une tôle métallique qui est au moins d'un côté revêtue d'une couche de téflon isolante.

4. Agencement de palier à roulement selon la revendication 3,
**caractérisé en ce que**
la couche de téflon présente une épaisseur minimale de 0,2 mm.

5. Agencement de palier à roulement selon la revendication 1,
**caractérisé en ce que**
l'élément cylindrique creux (9) est fabriqué à partir d'un manchon de palier lisse isolé par un revêtement en téflon.

6. Agencement de palier à roulement selon la revendication 1,
**caractérisé en ce que**
l'agencement d'isolation entoure la bague extérieure (5) du palier à roulement (3) en forme de U ou en forme de L.

7. Agencement de palier à roulement selon la revendication 6,
**caractérisé en ce que**
dans le cas d'un habillage en forme de L du siège de palier (4), le palier à roulement (3) est maintenu par une bague de retenue (11) agissant par pression axiale sur la bague extérieure (5) et fixée au stator (1) au moyen de vis (12), laquelle bague de retenue est fabriquée en un matériau non conducteur de l'électricité.

8. Agencement de palier à roulement selon la revendication 1,
**caractérisé en ce que**
l'élément de disque annulaire (10a, 10b) est fabriqué en papier isolant ayant une épaisseur minimale de 0,15 mm.
